# FASCICULE DE BREVET EUROPEEN

(11) **EP 2 470 412 B1**
(45) Date de publication et mention de la délivrance du brevet: **12.06.2013**
(21) Numéro de dépôt: 10762999.0
(22) Date de dépôt: 23.08.2010
(51) Int. Cl.: B62D 25/14

(54) **ORGANE DE FIXATION D'UNE TRAVERSE DE PLANCHE DE BORD SUR UN ORGANE DE STRUCTURE, NOTAMMENT POUR VÉHICULE AUTOMOBILE**
ELEMENT ZUR BEFESTIGUNG EINER ARMATURENBRETTVERSTREBUNG AN EINEM BAUTEIL, IM BESONDEREN FÜR EIN KRAFTFAHRZEUG
MEMBER FOR ATTACHING A DASHBOARD CROSSBEAM ONTO A STRUCTURAL MEMBER, IN PARTICULAR FOR A MOTOR VEHICLE

(30) Priorité: 28.08.2009 FR 0955888
(43) Date de publication de la demande: 04.07.2012
(73) Titulaire: Faurecia Intérieur Industrie, 92000 Nanterre (FR)
(72) Inventeur: BAUDART, Laurent, F-60530 Fresnoy En Thelle (FR)
(74) Mandataire: Domenego, Bertrand
(86) Numéro de dépôt international: PCT/FR2010/051760
(87) Numéro de publication internationale: WO 2011/023896

(56) Documents cités:
- WO-A1-2008/018818
- DE-A1-102007 032 481
- FR-A1- 2 911 315
- FR-A1- 2 914 900

## Description

La présente invention concerne un organe de fixation d'une traverse de planche de bord sur un organe de structure, notamment pour véhicule automobile.

Dans un véhicule automobile, la traverse de planche de bord est habituellement reliée, aux moyens d'un organe de fixation rigide, à un organe de structure du véhicule automobile, tel qu'un tablier ou une traverse inférieure de baie. Cette liaison rigide permet de réduire les vibrations auxquelles est soumise la traverse de planche de bord.

En cas de choc à l'avant du véhicule automobile, l'organe de structure est généralement entraîné vers l'habitacle. Pour des raisons de sécurité des occupants de l'habitacle, l'organe de fixation est de préférence fusible, de sorte que la traverse de planche de bord n'est pas entraînée avec l'organe de structure vers l'habitable du véhicule en cas de choc.

Ainsi, on connaît déjà dans l'état de la technique, notamment d'après EP 1 057 717, un organe de fixation d'une traverse de planche de bord sur un organe de structure d'un véhicule automobile. Cet organe de fixation comporte au moins une partie adaptée pour se déformer lorsqu'elle est soumise à un effort prédéterminé. Ainsi, l'organe de fixation est susceptible de s'affaisser, en se déformant, lorsque l'organe de structure se déplace vers l'habitacle du véhicule en cas de choc.

Le document FR 2 914 900 montre en outre un organe de fixation d'une traverse de planche de bord sur un organe de structure d'un véhicule automobile, l'organe comprenant un premier et un second éléments de fixation. L'un des éléments de fixation présentant une partie de fixation sur la traverse et l'autre élément présentant une partie de fixation sur l'organe de structure, les premier et second éléments de fixation comportant des moyens fusibles de liaison, telles que les dites éléments de fixation sont reliés de manière fusible l'un à l'autre, et le premier élément de fixation se dissocie du second élément de fixation lorsqu'on applique une force prédéterminée.

Toutefois, il est généralement difficile de prévoir le comportement d'un tel organe de fixation en cas de choc.

L'invention a notamment pour but de remédier à cet inconvénient, en fournissant un organe de fixation dont la maîtrise du comportement en cas de choc est améliorée. L'invention prévoit également de fournir un organe de fixation fiable, économique, et ayant une masse faible.

A cet effet, l'invention a pour objet un organe de fixation d'une traverse de planche de bord sur un organe de structure d'un véhicule automobile, caractérisé en ce qu'il comprend au moins des premier et second éléments de fixation, s'étendant entre une première partie de fixation sur la traverse et une seconde partie de fixation sur l'organe de structure, les premier et second éléments de fixation comportant des moyens fusibles de liaison comprenant des formes d'emboîtement complémentaires, telles que :
- les premier et second éléments de fixation sont reliés de manière fusible l'un à l'autre par emboîtement des formes complémentaires, et
- le premier élément de fixation se dissocie du second élément de fixation lorsqu'on applique sur la seconde partie de fixation une force prédéterminée en direction de la première partie de fixation.

Les premier et second éléments de fixation sont fixés l'un à l'autre de manière simple et économique, par emboîtement de formes complémentaires, et cela de manière fusible, de sorte qu'ils peuvent se dissocier l'un de l'autre sous l'effet de la force prédéterminée, correspondant généralement à un choc sur le véhicule automobile.

Le comportement de l'organe de fixation en cas de choc est facilement prévisible, puisqu'il résulte notamment de la dissociation des premier et second éléments de fixation. En outre, du fait de cette dissociation, le caractère fusible de l'organe de fixation est amélioré.

De préférence, un organe de fixation selon l'invention comporte l'une ou plusieurs des caractéristiques suivantes, prises seules ou en combinaison.
- Le premier élément de fixation comporte la première partie de fixation, et le second élément de fixation comporte la seconde partie de fixation.
- Les formes d'emboîtement forment des créneaux, tels que au moins un créneau de chacun des premier ou second éléments de fixation est emboîté entre deux créneaux adjacents de l'autre des second ou premier éléments de fixation.
- Les premier et second éléments de fixation sont en tôle, et s'étendent respectivement, au moins partiellement, parallèlement à des premier et second plans, le premier plan étant perpendiculaire au second plan.
- L'organe de fixation comporte deux premiers éléments de fixation parallèles, agencés latéralement de part et d'autre du second élément de fixation, de façon à présenter ensemble une section en U.
- La seconde partie de fixation est repliée par rapport au second plan, et porte des moyens de fixation sur l'organe de structure, par exemple des orifices de fixation.
- Les premier et second éléments de fixation ont des épaisseurs différentes.
- Les moyens de liaison entre les premier et second éléments de fixation comportent au moins une ligne de soudure entre ces premier et second éléments de fixation.
- L'organe de fixation comporte un élément de renfort, relié aux premier et second éléments de fixation.
- Le premier élément de fixation est au moins en partie délimitée par des premier, deuxième, troisième et quatrième bords, tels que : le premier bord porte les formes d'emboîtement, et s'étend entre la première partie de fixation et le deuxième bord, le deuxième bord prolonge le premier bord et forme avec ce premier bord un angle non nul, le deuxième bord étant destiné à former un appui pour la seconde partie de fixation, le troisième bord prolonge le deuxième bord et forme avec ce deuxième bord un angle non nul, le troisième bord étant destiné à être relié à l'élément de renfort, et le quatrième bord s'étend entre le troisième bord et la première partie de fixation.

L'invention sera mieux comprise à la lecture de la description qui va suivre, donnée uniquement à titre d'exemple et faite en se référant aux figures dans lesquelles :

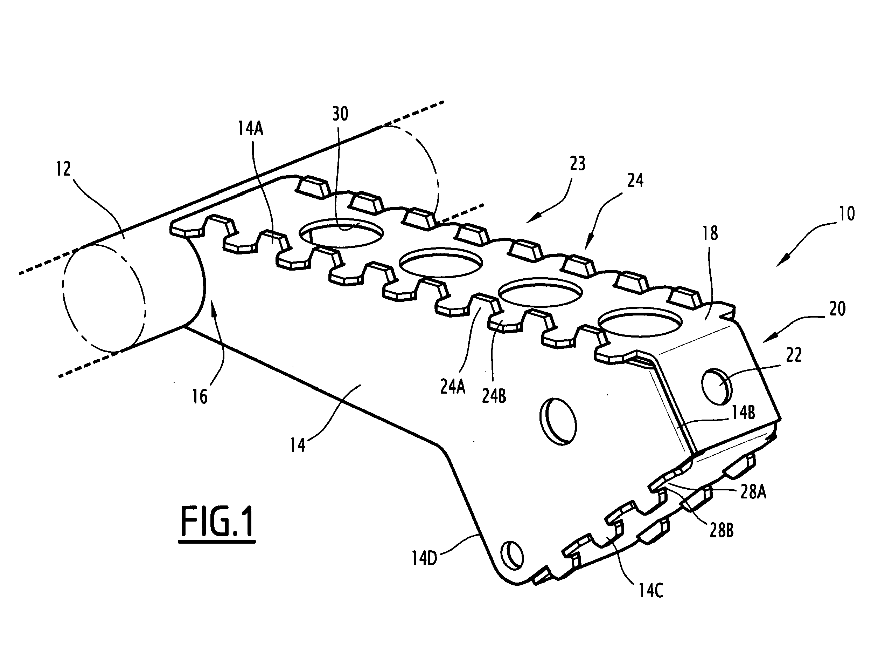

- la figure 1 est une vue en perspective d'un organe de fixation selon un mode de réalisation de l'invention ; et

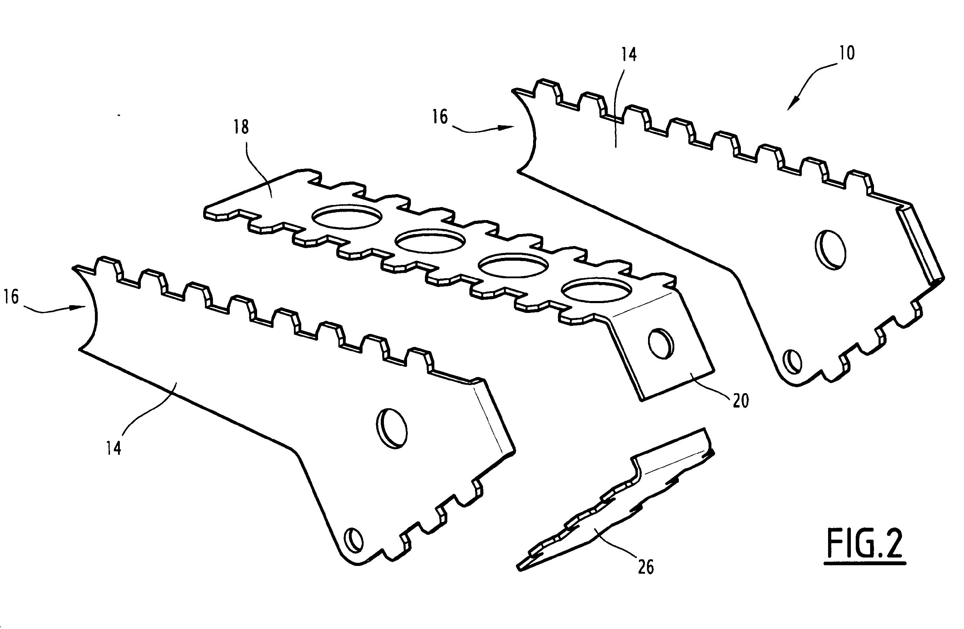

- la figure 2 est une vue éclatée de l'organe de fixation de la figure 1.

On a représenté sur les figures un organe de fixation 10, pour la fixation d'une traverse 12 de panneau de bord sur un organe de structure (non représenté) d'un véhicule automobile. Par exemple, l'organe de structure est un tablier ou une traverse inférieure de baie du véhicule automobile. On rappelle qu'une traverse inférieure de baie est une traverse s'étendant sensiblement parallèlement à la traverse de panneau de bord 12, sur laquelle est fixée la partie inférieure du pare-brise du véhicule automobile.

L'organe de fixation 10 comporte au moins un, de préférence deux, premiers éléments de fixation 14, chaque premier élément de fixation 14 comportant une première partie 16 de fixation sur la traverse 12.

L'organe de fixation 10 comporte également un second élément de fixation 18, distinct et séparé de chaque premier élément de fixation 14, comportant une seconde partie 20 de fixation sur l'organe de structure. Cette seconde partie de fixation 20 comporte des moyens de fixation 22 sur l'organe de structure, comprenant par exemple des orifices de fixation destinées à recevoir un ensemble à vis et écrou.

Les premiers 14 et second 18 éléments de fixation sont reliés entre eux de manière fusible, de façon à se dissocier lorsqu'on applique sur la seconde partie de fixation 20 une force prédéterminée en direction de la première partie de fixation 16. Cette force prédéterminée correspond généralement à un choc sur le véhicule automobile, entraînant le déplacement de l'organe de structure vers l'habitacle du véhicule automobile, donc vers la traverse de panneau de bord 12.

Afin d'assurer cette fusibilité, les premier 14 et second 18 éléments de fixation comportent des moyens de liaison fusible 23, comprenant des formes d'emboîtement complémentaires 24. Les premiers 14 et second 18 éléments de fixation sont reliés entre eux de manière fusible par emboîtement de ces formes complémentaires 24.

Les formes d'emboîtement 24 forment des premiers 24A et seconds 24B créneaux, tels qu'au moins un premier créneau 24A de chaque premier élément de fixation 14 est emboîté entre deux seconds créneaux adjacents 24B du second élément de fixation 18. De même, au moins un second créneau 24B du second élément de fixation 18 est emboîté entre deux premiers créneaux adjacents 24A de l'un des premiers éléments de fixation 14.

On notera que les créneaux 24A, 24B pourraient présenter différentes formes, par exemple en fonction de la force prédéterminée à partir de laquelle on souhaite que ces créneaux se déboîtent. Conformément à l'exemple de réalisation représenté, les créneaux 24A, 24B présentent les mêmes formes et les mêmes dimensions, et sont agencés de manière continue sur chacun des premiers 14 et second 18 éléments de fixation.

En variante, les créneaux 24A, 24B pourraient présenter des formes et/ou des dimensions différentes, et être agencés de manière discontinue sur les premiers 14 et second 18 éléments de fixation.

On notera que les premiers 14 et second 18 éléments de fixation sont en tôle, et s'étendent respectivement, au moins partiellement, parallèlement à des premier et second plans, le premier plan étant perpendiculaire au second plan. Ainsi, les deux premiers éléments de fixation 14 sont agencés latéralement de part et d'autre du second élément de fixation 18, de façon à présenter ensemble une section en U. On notera qu'une telle forme en U est particulièrement rigide, et permet en partie d'assurer une rigidité satisfaisante de l'organe de fixation 10.

On notera que les premiers créneaux 24A de chaque premier élément de fixation 14 s'étendent parallèlement au premier plan, et que les créneaux 24B du second élément de fixation 18 s'étendent parallèlement au second plan.

De préférence, les moyens fusibles de fixation 23 comportent au moins une ligne de soudure entre chaque premier élément de fixation 14 et le second élément de fixation 18.

Cette ligne de soudure permet de renforcer la liaison fusible de façon à ajuster la force prédéterminée à partir de laquelle les moyens fusibles de fixation 23 se détachent. Ainsi, on prévoit généralement plusieurs lignes de soudure entre chaque premier élément de fixation 14 et le second élément de fixation 18, l'étendue de ces lignes de soudure influant sur la force prédéterminée à partir de laquelle les moyens fusibles de fixation 23 se détachent.

Grâce à ces lignes de soudure, l'organe de fixation 10 peut être adapté à différents types de véhicules dont les comportements sont différents en cas de choc, donc dans lesquels les efforts prédéterminés sont différents.

L'organe de fixation 10 comporte de préférence un élément de renfort 26 relié aux premier 14 et second 18 éléments de fixation, de façon à rigidifier cet organe de fixation 10. Cet élément de renfort 26 est de préférence en tôle, de forme générale rectangulaire, et par exemple d'épaisseur sensiblement égale à 2,5 mm.

On décrira ci-dessous plus précisément les formes des premiers 14 et second 18 éléments de fixation, conformément à l'exemple de mode de réalisation représenté.

Chaque premier élément de fixation 14 est en tôle, et au moins en partie délimitée par des premier 14A, deuxième 14B, troisième 14C et quatrième 14D bords. De préférence, chaque premier élément de fixation 14 a une épaisseur différente de celle de l'élément de renfort, par exemple une épaisseur sensiblement égale à 1,5 mm.

Le premier bord de liaison 14A présente les premiers créneaux 24A, et s'étend entre la première partie de fixation 16 et le deuxième bord de support 14B.

Le deuxième bord de support 14B prolonge le premier bord 14A et forme avec ce premier bord 14A un angle non nul. Ce deuxième bord de support 14B est destiné à former un appui pour la seconde partie de fixation 20.

Le troisième bord de renfort 14C prolonge le deuxième bord 14B et formant avec ce deuxième bord 14B un angle non nul. Ce troisième bord de renfort 14C est destiné à être relié à l'élément de renfort 26. A cet effet, ce troisième bord de renfort 14C présente par exemple des troisièmes créneaux 28A, destinés à coopérer avec des créneaux complémentaires 28B portés par l'élément de renfort 26.

Le quatrième bord 14D s'étend entre le troisième bord 14C et la première partie de fixation 16.

Le second élément de fixation 18 est également en tôle, et présente une forme rectangulaire allongée depuis la première partie de fixation 16 vers la seconde partie de fixation 20 et s'étendant dans le second plan. De préférence, le second élément de fixation a une épaisseur différente de celle du chaque premier élément de fixation 14, et de celle de l'élément de renfort 26, par exemple une épaisseur sensiblement égale à 1 mm.

La seconde partie de fixation 20 est repliée par rapport au second plan d'un angle égal à l'angle formé entre le premier bord de liaison 14A et le deuxième bord de support 14B de chaque premier élément de fixation 14. Ainsi, la seconde partie de fixation 20 repose sur le deuxième bord de support 14B, ou sur au moins une languette repliée prolongeant le deuxième bord de support 14B.

De préférence, le second élément de fixation 18 comporte au moins une ouverture 30, destinée à réduire la masse de ce second élément de fixation 18. Dans l'exemple représenté, le second élément de fixation 18 comporte quatre ouvertures 30.

On notera que, du fait des épaisseurs faibles des premiers 14 et second 18 éléments de fixation, et de l'élément de renfort 26, l'organe de fixation 10 présente une masse faible.

En cas de choc sur le véhicule automobile, entraînant un effort d'écrasement de l'organe 10 dirigé depuis la seconde partie de fixation 20 en direction de la première partie de fixation 16, les premiers 14 et second 18 éléments de fixation se déforment, entraînant le déboîtement des créneaux 24A et 24B les uns des autres sous l'effet de cet effort, s'il est supérieur à la force prédéterminée.

On obtient donc, de manière simple et économique, un organe de fixation fusible 10 entre la traverse de planche de bord 12 et l'organe de structure du véhicule automobile.

On notera que l'invention n'est pas limitée au mode de réalisation précédemment décrit, et pourrait présenter diverses variantes sans sortir du cadre des revendications.

Par exemple, les première et seconde parties de fixation pourraient être portées par les premiers éléments de fixation 14. Dans ce cas, le second élément 18 formerait un couvercle fusible de rigidification, destiné à se détacher des premiers éléments de fixation 14 en cas de choc afin de faciliter leur affaissement.

## Revendications

1. Organe (10) de fixation d'une traverse (12) de planche de bord sur un organe de structure d'un véhicule automobile, **caractérisé en ce qu'**il comprend au moins un premier (14) et un second (18) éléments de fixation, s'étendant entre une première partie (16) de fixation sur la traverse (12) et une seconde partie (20) de fixation sur l'organe de structure, les premier (14) et second (18) éléments de fixation comportant des moyens fusibles de liaison (23) comprenant des formes d'emboîtement complémentaires (24), telles que :
- les premier (14) et second (18) éléments de fixation sont reliés de manière fusible l'un à l'autre par emboîtement des formes complémentaires (24), et
- le premier élément de fixation (14) se dissocie du second élément de fixation (18) lorsqu'on applique sur la seconde partie de fixation (20) une force prédéterminée en direction de la première partie de fixation (16).

2. Organe de fixation (10) selon la revendication 1, dans lequel le premier élément de fixation (14) comporte la première partie de fixation (12), et le second élément de fixation (18) comporte la seconde partie de fixation (20).

3. Organe de fixation (10) selon la revendication 1 ou 2, dans lequel les formes d'emboîtement (24) forment des créneaux (24A, 24B), tels que au moins un créneau (24A, 24B) de chacun des premier (14) ou second (18) éléments de fixation est emboîté entre deux créneaux adjacents (24B, 24A) de l'autre des second (18) ou premier (14) éléments de fixation.

4. Organe de fixation (10) selon l'une quelconque des revendications précédentes, dans lequel les premier (14) et second (18) éléments de fixation sont en tôle, et s'étendent respectivement, au moins partiellement, parallèlement à des premier et second plans, le premier plan étant perpendiculaire au second plan.

5. Organe de fixation (10) selon la revendication 4, comportant deux premiers éléments de fixation (14) parallèles, agencés latéralement de part et d'autre du second élément de fixation (18), de façon à présenter ensemble une section en U.

6. Organe de fixation (10) selon la revendication 4 ou 5, dans lequel la seconde partie de fixation (20) est repliée par rapport au second plan, et porte des moyens de fixation (22) sur l'organe de structure, par exemple des orifices de fixation.

7. Organe de fixation (10) selon l'une quelconque des revendications 4 à 6, dans lequel les premier (14) et second (18) éléments de fixation ont des épaisseurs différentes.

8. Organe de fixation (10) selon l'une quelconque des revendications précédentes, dans lequel les moyens de liaison (23) entre les premier (14) et second (18) éléments de fixation comportent au moins une ligne de soudure entre ces premier (14) et second (18) éléments de fixation.

9. Organe de fixation (10) selon l'une quelconque des revendications précédentes, comportant un élément de renfort (26), relié aux premier (14) et second (18) éléments de fixation.

10. Organe de fixation (10) selon la revendication 9, dans lequel le premier élément de fixation (14) est au moins en partie délimitée par des premier (14A), deuxième (14B), troisième (14C) et quatrième (14D) bords, tels que :
- le premier bord (14A) porte les formes d'emboîtement (24A), et s'étend entre la première partie de fixation (16) et le deuxième bord (14B),
- le deuxième bord (14B) prolonge le premier bord (14A) et forme avec ce premier bord (14A) un angle non nul, le deuxième bord (14B) étant destiné à former un appui pour la seconde partie de fixation (20),
- le troisième bord (14C) prolonge le deuxième bord (14B) et forme avec ce deuxième bord (14B) un angle non nul, le troisième bord (14C) étant destiné à être relié à l'élément de renfort, et
- le quatrième bord (14B) s'étend entre le troisième bord (14C) et la première partie de fixation (16).

## Patentansprüche

1. Element (10) zum Befestigen einer Querstrebe (12) eines Armaturenbretts an einem Strukturelement eines Kraftfahrzeugs, **dadurch gekennzeichnet, dass** es wenigstens ein erstes (14) und ein zweites (18) Befestigungselement aufweist, die sich zwischen einem ersten Teil (16) zur Befestigung an der Querstrebe (12) und einem zweiten Teil (20) zur Befestigung (20) an dem Strukturelement erstrecken, wobei das erste (14) und das zweite (18) Befestigungselement zerstörbare Verbindungmittel (23) aufweisen, die komplementäre Verschachtelungs-Formen (24) haben, derart, dass:
- das erste (14) und das zweite (18) Befestigungselement in zerstörbare Weise durch das Verschachteln der komplementären Formen (24) miteinander verbunden sind, und
- das erste Befestigungselement (14) sich von dem zweiten Befestigungselement (18) löst, wenn man auf den zweiten Befestigungsteil (20) eine vorbestimmte Kraft in Richtung von dem ersten Befestigungsteil (16) ausübt.

2. Element zum Befestigen (10) gemäß Anspruch 1, wobei das erste Befestigungselement (14) den ersten Befestigungsteil (12) und das zweite Befestigungselement (18) den zweiten Befestigungsteil (20) hat.

3. Element zum Befestigen (10) gemäß Anspruch 1 oder 2, wobei die Verschachtelungs-Formen (24) Schlitze (24A, 24B) bilden, derart, dass wenigstens ein Schlitz (24A, 24B) von jedwedem von dem ersten Befestigungselement (14) oder dem zweiten Befestigungselement (18) zwischen zwei benachbarte Schlitze (24B, 24A) des anderen von dem zweiten (18) oder dem ersten (14) Befestigungselement verschachtelt ist.

4. Element zum Befestigen (10) gemäß irgendeinem der vorhergehenden Ansprüche, wobei das erste Befestigungselement (14) und das zweite Befestigungselement (18) Bleche sind und sich jeweils wenigstens teilweise parallel zu einer ersten Ebene und einer zweiten Ebene erstrecken, wobei die erste Ebene senkrecht zur zweiten Ebene ist.

5. Element zum Befestigen (10) gemäß Anspruch 4, mit zwei parallelen ersten Befestigungselementen (14), die beiderseits seitlich des zweiten Befestigungselements (18) angeordnet sind unter gemeinsamer Bildung eines U-Querschnitts.

6. Element zum Befestigen (10) gemäß Anspruch 4 oder 5, wobei der zweite Befestigungsteil (20) bezüglich der zweiten Ebene abgebogen ist und Mittel zur Befestigung (22) an dem Strukturelement hat, wie z.B. Befestigungslöcher.

7. Element zum Befestigen (10) gemäß irgendeinem der Ansprüche 4 bis 6, wobei das erste (14) und das zweite (18) Befestigungselement unterschiedliche Dicken haben.

8. Element zum Befestigen (10) gemäß irgendeinem der vorhergehenden Ansprüche, wobei die Verbindungsmittel (23) zwischen dem ersten (14) und dem zweiten (18) Befestigungselement wenigstens eine Schweißlinie zwischen dem ersten (14) und dem zweiten (18) Befestigungselement haben.

9. Element zum Befestigen (10) gemäß irgendeinem der vorhergehenden Ansprüche, aufweisend ein Verstärkungselement (26), das mit dem ersten (14) und dem zweiten (18) Befestigungselement verbunden ist.

10. Element zum Befestigen (10) gemäß Anspruch 9, wobei das erste Befestigungselement (14) wenigstens teilweise von dem ersten (14A), dem zweiten (14B), dem dritten (14C) und dem vierten (14D) Rand begrenzt ist, derart, dass:
- der erste Rand (14A) die Verschachtelungsformen (24A) hat und sich zwischen dem ersten Befestigungsteil (16) und dem zweiten Rand (14B) erstreckt,
- der zweite Rand (14B) den ersten Rand (14A) verlängert und mit dem ersten Rand (14A) einen Winkel ungleich Null bildet, wobei der zweite Rand (14B) dazu bestimmt ist, eine Auflage für dem zweiten Befestigungsteil (20) zu bilden,
- der dritte Rand (14C) den zweiten Rand (14B) verlängert und mit dem zweiten Rand (14B) eine Winkel ungleich Null bildet, wobei der dritte Rand (14C) dazu bestimmt ist, mit dem Verstärkungselement verbunden zu sein, und
- der vierte Rand (14D) sich zwischen dem dritten Rand (14C) und dem ersten Befestigungsteil (16) erstreckt.

## Claims

1. Member (10) for affixing a crossbeam (12) of a dashboard to a structural member of an automotive vehicle, **characterised in that** it comprises at least a first (14) and a second (18) fixing element extending between a first fixing part (16) on the crossbeam (12) and a second fixing part (20) on the structural member, the first (14) and second (18) fixing elements comprising fusible connecting means (23) having complementary nesting shapes (24) such that:
- the first (14) and second (18) fixing elements are connected to one another in a fusible manner by nesting the complementary shapes (24), and
- the first fixing element (14) detaches from the second fixing element (18) when a predetermined force is applied to the second fixing part (20) in the direction of the first fixing part (16).

2. Fixing member (10) as claimed in claim 1, in which the first fixing element (14) incorporates the first fixing part (12) and the second fixing element (18) incorporates the second fixing part (20).

3. Fixing member (10) as claimed in claim 1 or 2, in which the nesting shapes (24) form teeth (24A, 24B) so that at least one tooth (24A, 24B) of each of the first (14) or second (18) fixing elements is nested between two adjacent teeth (24B, 24A) of the other of the second (18) or first (14) fixing elements.

4. Fixing member (10) as claimed in any one of the preceding claims, in which the first (14) and second (18) fixing elements are made from sheet metal and extend respectively at least partially parallel with the first and second planes, the first plane being perpendicular to the second plane.

5. Fixing member (10) as claimed in claim 4, comprising two parallel first fixing elements (14) disposed laterally on either side of the second fixing element (18) so as to form a U-shaped section together.

6. Fixing member (10) as claimed in claim 4 or 5, in which the second fixing part (20) is folded back from the second plane and bears means (22) for affixing to the structural member, for example fixing orifices.

7. Fixing member (10) as claimed in any one of claims 4 to 6, in which the first (14) and second (18) fixing elements are of different thicknesses.

8. Fixing member (10) as claimed in any one of the preceding claims, in which the connecting means (23) between the first (14) and second (18) fixing elements comprises at least a line of solder between these first (14) and second (18) fixing elements.

9. Fixing member (10) as claimed in any one of the preceding claims, having a reinforcing element (26) connected to the first (14) and second (18) fixing elements.

10. Fixing member (10) as claimed in claim 9, in which the first fixing element (14) is at least partially bounded by first (14A), second (14B), third (14C) and fourth (14D) edges such that:
- the first edge (14A) bears the nesting shapes (24A) and extends between the first fixing part (16) and the second edge (14B),
- the second edge (14B) extends the first edge (14A) and subtends an angle that is not zero with this first edge (14A), the second edge (14B) being designed to form a support for the second fixing part (20),.
- the third edge (14C) extends the second edge (14B) and subtends an angle that is not zero with this second edge (14B), the third edge (14C) being designed to be connected to the reinforcing element, and
- the fourth edge (14B) extends between the third edge (14C) and the first fixing part (16).
